# EUROPEAN PATENT SPECIFICATION

(11) **EP 1 093 883 B1**
(45) Date of publication and mention of the grant of the patent: **02.01.2004**
(21) Application number: 00203521.0
(22) Date of filing: 11.10.2000
(51) Int. Cl.: B23Q 1/25

(54) **Electro-spindle separable into a rotor part and a stator part**
Elektrische Spindel, in Rotor und Stator teilbar
Broche électrique, séparable en rotor et stator

(30) Priority: 14.10.1999 IT MI992152
(43) Date of publication of application: 25.04.2001
(73) Proprietor: F.M. Elettromeccanica s.r.l., 06034 Foligno (PG) (IT)
(72) Inventor: Marelli, Flavio, 20036 Meda (MI) (IT)
(74) Representative: Mittler, Enrico

(56) References cited:
- EP-A- 0 259 517
- PATENT ABSTRACTS OF JAPAN vol. 1996, no. 10, 31 October 1996 (1996-10-31) & JP 08 141803 A (IKEGAI CORP), 4 June 1996 (1996-06-04)
- PATENT ABSTRACTS OF JAPAN vol. 1999, no. 10, 31 August 1999 (1999-08-31) & JP 11 129101 A (OKUMA CORP), 18 May 1999 (1999-05-18)

## Description

The present invention refers to an electro-spindle separable into a rotor part and a stator part.

Electro-spindles for machine tools comprise a rotor part, comprising a spindle shaft provided with means for coupling the tools, which is coupled by means of bearings to a stator part.

In the event of maintenance or repair of the rotor part of the electro-spindles, for example when replacing the bearings, it is advantageous to separate only the rotor part from the electro-spindle, so as to simplify the operation and limit the time the machine tool cannot be used which sometimes can be long, causing considerable reduction in productivity.

JP-A-08141803 discloses an electro-spindle according to the preamble of claim 1.

JP-A-11129101 discloses a spindle device which is rotationally supported inside a fixed housing through rolling bearings.

In view of the state of the technique described, object of the present invention is to provide an electro-spindle which can be easily separated and reassembled in its stator and rotor part.

In accordance with the present invention, said object is reached by means of an electro-spindle as defined in claim 1.

Thanks to the present invention it is possible to obtain a coupling that can be easily separated and even more easily reconnected. In addition, in particular, thanks to the presence of the bush and of the circumferential rings, during the phases of insertion and extraction of the rotor part of the electro-spindle the coupling system does not decompose into its elementary parts thus facilitating the operations. The fact that the bearing is extracted in its entirety enables the rotor part to be inserted in its seat rapidly and with precision. In addition, thanks to the axial holding element precise alignment of the coupling system can be obtained.

The characteristics and advantages of the present invention will be evident from the following detailed description of an embodiment thereof, illustrated as non-limiting example in the enclosed drawings, in which:
Figure 1 represents a section of a separable coupling system in accordance with the present invention,
Figure 2 represents a section of an electro-spindle using the coupling system in accordance with the present invention,
Figure 3 represents a section according to the line A-A of the electro-spindle of Figure 2,
Figure 4, similar to Figure 2, represents a section of an electro-spindle in the extraction phase,
Figure 5, similar to Figure 2, represents a section of an electro-spindle in the insertion phase.

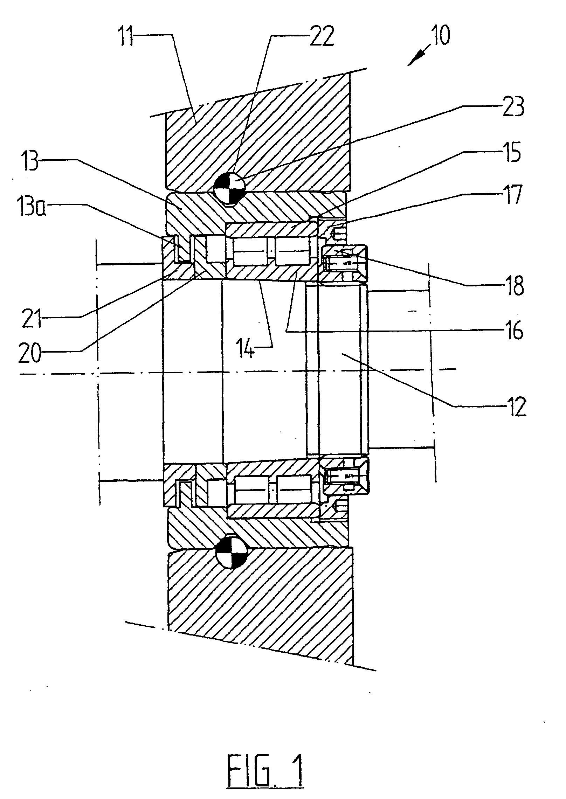

Now with reference to Figure 1, it represents a coupling system 10 in accordance with the present invention , between a fixed mechanical structure 11 and a pivot 12 suitable for rotating around its own axis.

The coupling system 10 comprises a bush 13 to which a first rolling surface (or first ring) 15 of a bearing 14 is fixed. A second rolling surface (or second ring) 16 of the bearing 14 is fixed on the pivot 12.

On the bush 13 and on the pivot 12 are respectively fixed two ring nuts 17 and 18 for the side blocking of the respective rolling surfaces 15 and 16 of the bearing 14.

The bearing 14 thus results fixed between the bush 13 and the pivot 12, in particular the first rolling surface 15 is fixed on the bush 13 and the second rolling surface 16 is fixed on the pivot 12.

On the bush 13, in proximity to the lateral side of the bearing 14 opposite to that where the ring nuts 17 and 18 are fixed, a first circumferential ring 13a is provided which extends, for a lesser distance than the height of the bearing 14, towards the inside of the bush 13. On the pivot 12, in position next to that of the first circumferential ring 13a, a second circumferential ring 20 and a third circumferential ring 21 are present, which extend, for a lesser distance than the height of the bearing 14, towards the outside of the pivot 12, preferably consisting of two L-shaped elements fixed to the pivot 12.

The second circumferential ring 20 and the third circumferential ring 21 are positioned so that the first circumferential ring 13a is interposed between them without contact (axially and transversally), that is so that there are several millimeters between one ring and the other. In addition, ring 13a must not be in contact with the pivot 12, so as to permit correct rotation, without friction, of the pivot 12 and of the rings 20 and 21 integral with said pivot 12, in relation to the bush 13 and to the ring 13a.

In alternative, the pivot 12 could have only one circumferential ring and the bush 13 could have two, or only one circumferential ring can be fixed indifferently on the pivot 12 or on the bush 13 and, in counter-position to this ring, a U-shaped cavity in which the ring can introduce itself can be provided.

The mechanical structure 11 and the bush 13 show an axial holding element 22 suitable for blocking and unblocking the constraint that is created between them thanks to said axial holding element 22.

Preferably, the mechanical structure 11 and the bush 13 show two cavities that create a guide in which the axial holding element 22 can slide and which preferably comprises a blocking pin 23. Said pin 23 also has the function of aligning the bush 13 in relation to the structure 11. When the -. blocking pin 23 is inserted, in a first operative position, the mechanical structure 11 and the bush 13 are constrained to each other, and the pivot 12 can rotate around its own axis.

When the blocking pin 23 is disconnected, in a second operative position, the mechanical structure 11 and the bush 13 are no longer constrained to each other, so that the pivot 12, the bearing 14 and the bush 13 can be extracted from their seat. The presence of two pins 23 is preferable for better alignment of the system 10.

As previously described, the bush 13, the first rolling surface 15 and the ring nut 17 are fixed to each other; the pivot 12, the second rolling surface 16 and the ring nut 18 are fixed to each other. When the axial holding element 22 unblocks its own constraint, in absence of the pulling rings 13a, 20 and 21, during the extraction or insertion phase of the pivot 12, the two blocks of elements listed above would separate and the operations mentioned above would result rather difficult. Thanks to the pulling rings 13a, 20 and 21, intercalated between each other, during the phases of extraction and insertion of the pivot 12, the bearing 14 is always aligned and composed thereby facilitating and simplifying the above mentioned operations. Once the blocking pin 23 is inserted in the blocking position the pulling rings 13a, 20 and 21 result separated from each other and aligned, so as to permit correct rotation of the members in movement.

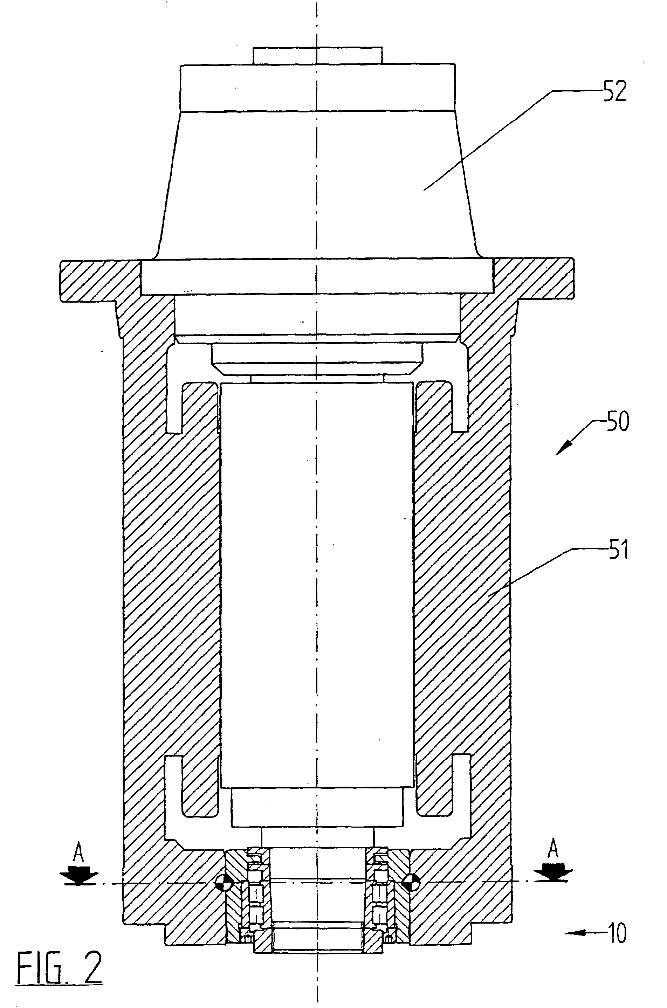

Figure 2 represents a possible application of the coupling system 10 in accordance with the present invention. It shows an electro-spindle 50 composed of one stator part 51 (corresponding to the mechanic structure 11), and of one extractable rotor part 52 (corresponding to the pivot 12), by means of the coupling system 10 in accordance with the present invention.

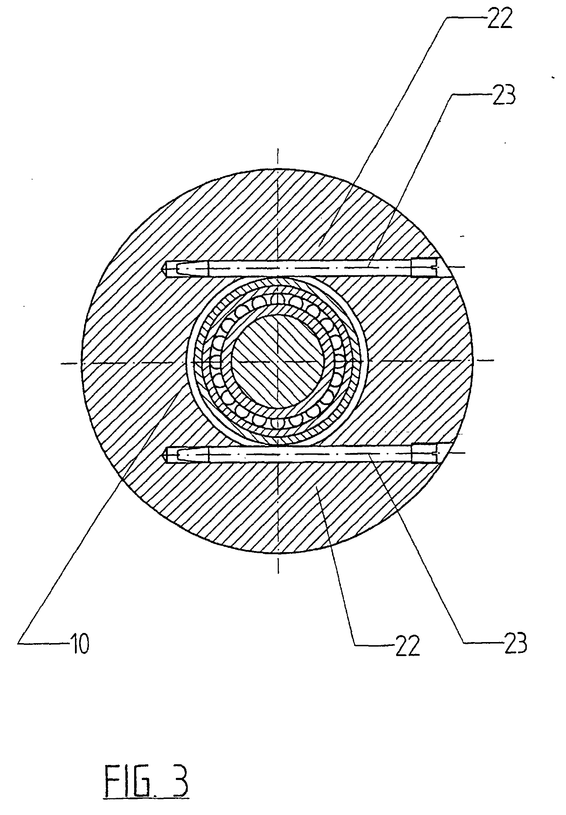

The section according to the line A-A of the electro-spindle of Figure 2 is shown in Figure 3, where the blocking pins 23 can be noted placed in the first operative blocking position.

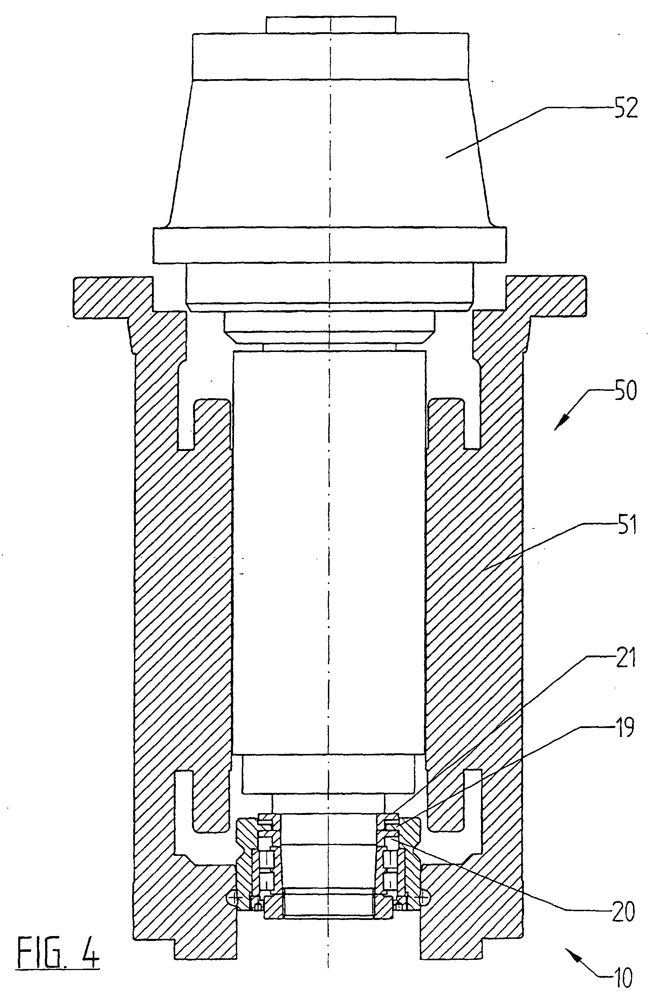

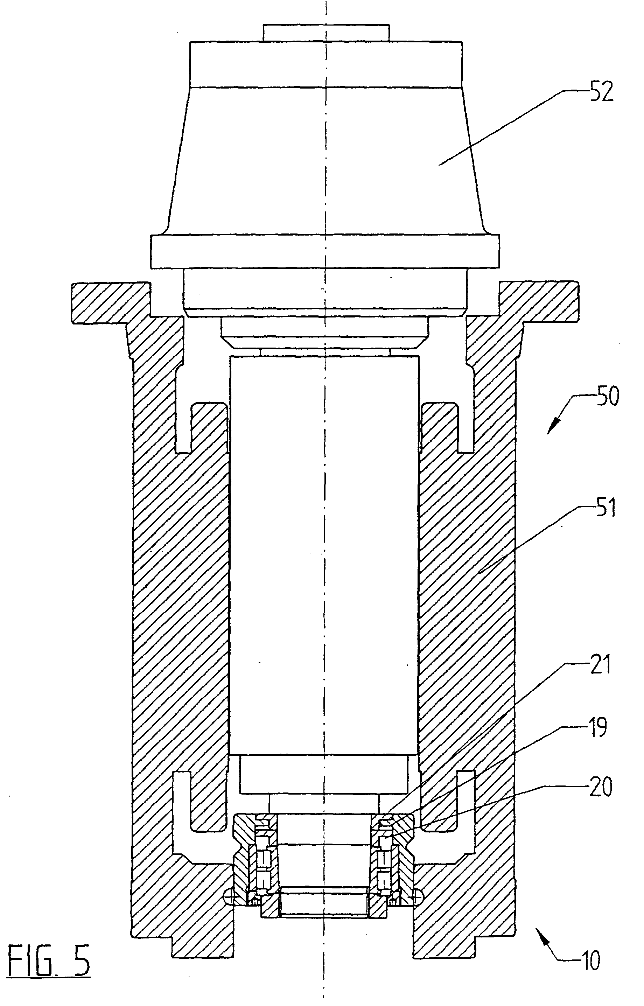

Figure 4 and Figure 5, similar to Figure 2, represent a section of an electro-spindle 50 respectively in the extraction phase and in the insertion phase.

In the extraction phase (Figure 4) it can be noted that a side surface of the second circumferential ring 20, fixed on the pivot 12, is in direct contact with a side surface of the first circumferential ring 13a, preferably part of the bush 13, so that during the extraction of the extractable rotor group 52, the circumferential rings mentioned above pull the assembly of the coupling system 10.

In the insertion phase (Figure 5) it can be noted that a side surface of the third circumferential ring 21, fixed on the pivot 12, is in direct contact with a side surface of the first circumferential ring 13a preferably part of the bush 13, so that during the insertion of the extractable rotor group 52, the circumferential rings mentioned above pull the assembly of the coupling system 10.

## Claims

1. Electro-spindle (50) having a rotor part (52) equipped with a bearing (14), suitable for rotating around its own axis, and a stator part (51), wherein said bearing (14) is fixed to a bush (13), is interposed between said rotor part (52) and said bush (13), and is axially movable in conjunction with said rotor part (52) and said bush (13), said bush (13) is coupled to said stator part (51) by means of an axial holding element (22), said axial holding element (22) can be placed in a first operative position so that said rotor part (52), said bearing (14) and said bush (13) are constrained to said stator part (51 ), and in a second operative position so that said rotor part (52), said bearing (14) and said bush (13) are released from said stator part (51),
**characterized in that** said axial holding element (22) comprises a pin (23) housed in a respective sliding seat, transversal in relation to said rotor part (52), provided for in said stator part (51) and having said first operative coupling position between said bush (13) and said stator part (51) and said second operative releasing position between said bush (13) and said stator part (51).

2. Electro-spindle (50) in accordance with claim 1 **characterized in that** said axial holding element (22) is engaged with respective coupling means provided for on said bush (13).

3. Electro-spindle (50) in accordance with claim 2 **characterized in that** said coupling means comprise a circumferential groove provided on the external surface of said bush (13).

4. Electro-spindle (50) in accordance with claim 1 **characterized in that** said bush (13) comprises at least one pulling ring (13a) which extends towards the inside of said bush (13) and said rotor part (52) comprises at least one pulling ring (20, 21) which extends towards the outside of said rotor part (52), said pulling rings (13a, 20, 21) being placed so as to be interposed alternately between one other.

5. Electro-spindle (50) in accordance with claim 1 **characterized in that** said bearing (14) presents a first rolling surface (15) fixed on said bush (13).

6. Electro-spindle (50) in accordance with claim 5 **characterized in that** said bush (13) comprises a ring nut (17) suitable for fixing said first rolling surface (15) on said bush (13).

7. Electro-spindle (50) in accordance with claim 1 **characterized in that** said bearing (14) presents a second rolling surface (16) fixed on said rotor part (52).

8. Electro-spindle (50) in accordance with claim 7 **characterized in that** said rotor part (52) comprises a rig nut (18) suitable for fixing said second rolling surface (16) on said rotor part (52).

## Patentansprüche

1. Elektrische Spindel (50), die einen Rotorteil (52), der mit einem Lager (14) ausgerüstet ist, das zum Rotieren um seine eigene Achse herum geeignet ist, und einen Statorteil (51) aufweist, wobei das Lager (14) an einer Buchse (13) befestigt wird, zwischen dem Rotorteil (52) und der Buchse (13) angeordnet wird und axial beweglich in Verbindung mit dem Rotorteil (52) und der Buchse (13) ist, wobei die Buchse (13) mit dem Statorteil (51) durch ein axiales Halteelement (22) gekoppelt ist, wobei das axiale Halteelement (22) in einer ersten Arbeitsstellung angeordnet werden kann, so dass das Rotorteil (52), das Lager (14) und die Buchse an dem Statorteil (51) eingespannt werden, und in einer zweiten Arbeitsstellung, so dass das Rotorteil (52), das Lager (14) und die Buchse (13) von dem Statorteil (51) gelöst werden, **dadurch gekennzeichnet, dass** das axiale Halteelement (22) einen Stift (23) umfasst, der in einem entsprechenden Gleitsitz transversal bezüglich des Rotorteils (52)untergebracht wird, der in dem Statorteil (51) bereitgestellt wird, und eine erste Arbeitskopplungsstellung zwischen der Buchse (13) und dem Statorteil (51) und eine zweite Arbeitsfreigabestellung zwischen der Buchse (13) und dem Statorteil (51) aufweist.

2. Elektrische Spindel (50) nach Anspruch 1 **dadurch gekennzeichnet, dass** das axiale Halteelement (22) mit den jeweiligen Kopplungsmitteln in Eingriff gebracht wird, die in der Buchse bereitgestellt (13) sind.

3. Elektrische Spindel (50) nach Anspruch 2 **dadurch gekennzeichnet, dass** die Kopplungsmittel eine Umfangsnut umfassen, die in der Außenfläche der Buchse (13) bereitgestellt ist.

4. Elektrische Spindel (50) nach Anspruch 1 **dadurch gekennzeichnet, dass** die Buchse (13) mindestens einen Zugring (13a) umfasst, welcher sich zu der Innenseite der Buchse (13) hin erstreckt, und der Rotorteil (52) mindestens einen Zugring (20, 21) umfasst, welcher sich zu der Außenseite des Rotorteils (52) hin erstreckt, wobei die Zugringe (13a, 20, 21) so angeordnet werden, dass sie abwechselnd zueinander angeordnet sind.

5. Elektrische Spindel (50) nach Anspruch 1 **dadurch gekennzeichnet, dass** das Lager (14) eine erste Rolloberfläche (15) aufweist, die an der Buchse (13) fixiert ist.

6. Elektrische Spindel (50) nach Anspruch 5 **dadurch gekennzeichnet, dass** die Buchse (13) eine Ringnut (17) umfasst, die zur Fixierung der ersten Rolloberfläche (15) an der Buchse (13) geeignet ist.

7. Elektrische Spindel (50) nach Anspruch 1 **dadurch gekennzeichnet, dass** das Lager (14) eine zweite Rolloberfläche (16) aufweist, die an dem Rotorteil (52) fixiert ist.

8. Elektrische Spindel (50) nach Anspruch 7 **dadurch gekennzeichnet, dass** der Rotorteil (52) eine Ringnut (18) umfasst, die zur Fixierung der zweiten Rolloberfläche (16) an dem Rotorteil (52) geeignet ist.

## Revendications

1. Broche électrique (50) ayant une partie rotor (52) équipée d'un palier (14), conçue pour tourner sur son propre axe, et une partie stator (51), où ledit palier (14) est fixé à un coussinet (13), s'interposant entre ladite partie rotor (52) et ledit coussinet (13), et est axialement mobile en liaison avec ladite partie rotor (52) et ledit coussinet (13), ledit coussinet (13) est couplé à ladite partie stator (51) par l'intermédiaire d'un élément de maintien axial (22), ledit élément de maintien axial (22) peut être placé en une première position fonctionnelle de façon que ladite partie rotor (52), ledit palier (14) et ledit coussinet (13) soient contraints d'être liés à ladite partie stator (51), et dans une deuxième position fonctionnelle de façon que ladite partie rotor (52), ledit palier (14) et ledit coussinet (13) soient rendus libres de ladite partie stator (51),
**caractérisée en ce que** ledit élément de maintien axial (22) comprend un goujon (23) logé dans un siège de glissement respectif, transversal par rapport à ladite partie rotor (52), qui est prévu dans ladite partie stator (51) et possède ladite première position de couplage fonctionnelle entre ledit coussinet (13) et ladite partie stator (51) et ladite deuxième position de libération fonctionnelle entre ledit coussinet (13) et ladite partie stator (51).

2. Broche électrique (50) selon la revendication 1, **caractérisée en ce que** ledit élément de maintien axial (22) est en prise avec un moyen de couplage respectif prévu sur ledit coussinet (13).

3. Broche électrique (50) selon la revendication 2, **caractérisée en ce que** lesdits moyens de couplage comprennent une rainure circonférentielle disposée sur la surface externe dudit coussinet (13).

4. Broche électrique (50) selon la revendication 1, **caractérisée en ce que** ledit coussinet (13) comprend au moins une bague de traction (13a) qui s'étend en direction de l'intérieur dudit coussinet (13) et ladite partie rotor (52) comprend au moins une bague de traction (20, 21) qui s'étend vers l'extérieur de ladite partie rotor (52), lesdites bagues de traction (13a, 20, 21) étant placées de façon à être alternativement interposées entre elles.

5. Broche électrique (50) selon la revendication 1, **caractérisée en ce que** ledit palier (14) présente une première surface de roulement (15) fixée sur ledit coussinet (13).

6. Broche électrique (50) selon la revendication 5, **caractérisée en ce que** ledit coussinet (13) comprend un écrou de bague (17) conçu pour fixer ladite première surface de roulement (15) sur ledit coussinet (13).

7. Broche électrique (50) selon la revendication 1, **caractérisée en ce que** ledit palier (14) présente une deuxième surface de roulement (16) fixée sur ladite partie rotor (52).

8. Broche électrique (50) selon la revendication 7, **caractérisée en ce que** ladite partie rotor (52) comprend un écrou de bague (18) conçu pour fixer ladite deuxième surface de roulement (16) sur ladite partie rotor (52).
